(19) Europäisches Patentamt / European Patent Office / Office européen des brevets

(11) **EP 4 329 033 B1**

(12) **EUROPEAN PATENT SPECIFICATION**

(45) Date of publication and mention
of the grant of the patent:
**08.07.2026   Bulletin 2026/28**

(21) Application number: **22904678.4**

(22) Date of filing: **08.12.2022**

(51) International Patent Classification (IPC):
*H01M 10/0565* (2010.01)    *H01M 10/0562* (2010.01)
*H01M 10/052* (2010.01)

(52) Cooperative Patent Classification (CPC):
**H01M 10/0565; H01M 10/052; H01M 10/0562;**
H01M 2300/0082; Y02E 60/10

(86) International application number:
**PCT/KR2022/019893**

(87) International publication number:
**WO 2023/106849 (15.06.2023 Gazette 2023/24)**

(54) **SOLID ELECTROLYTE AND PREPARATION METHOD THEREFOR**

FESTELEKTROLYT UND HERSTELLUNGSVERFAHREN DAFÜR

ÉLECTROLYTE SOLIDE ET SON PROCÉDÉ DE PRÉPARATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **08.12.2021   KR 20210174998
07.12.2022   KR 20220169893**

(43) Date of publication of application:
**28.02.2024   Bulletin 2024/09**

(73) Proprietor: **LG Energy Solution, Ltd.
Seoul 07335 (KR)**

(72) Inventors:
• **LEE, Jung Pil**
**Daejeon 34122 (KR)**
• **KIM, Dong Kyu**
**Daejeon 34122 (KR)**

(74) Representative: **Goddar, Heinz J.
Boehmert & Boehmert
Anwaltspartnerschaft mbB
Pettenkoferstrasse 22
80336 München (DE)**

(56) References cited:
JP-A- 2000 268 871      KR-A- 20180 093 064
KR-A- 20200 122 904      KR-B1- 102 315 399
US-A1- 2018 166 759

• EREN ESIN: "Li+ doped chitosan-based solid polymer electrolyte incorporated with PEDOT:PSS for electrochromic device", BEYKENT UNIVERSITY, vol. 5, no. 3, 30 December 2018 (2018-12-30), pages 1413 - 1422, XP093275511, ISSN: 2149-0120, DOI: 10.18596/jotcsa.433901

• KIM JU-MYUNG, PARK HAN-SAEM, PARK JANG-HOON, KIM TAE-HEE, SONG HYUN-KON, LEE SANG-YOUNG: "Conducting Polymer-Skinned Electroactive Materials of Lithium-Ion Batteries: Ready for Monocomponent Electrodes without Additional Binders and Conductive Agents", APPLIED MATERIALS & INTERFACES, AMERICAN CHEMICAL SOCIETY, US, vol. 6, no. 15, 13 August 2014 (2014-08-13), US , pages 12789 - 12797, XP093069253, ISSN: 1944-8244, DOI: 10.1021/am502736m

EP 4 329 033 B1

## Description

## Background Art

Various batteries that can overcome the limitations of the current lithium secondary battery in terms of the capacity, safety, output, large size, and miniaturization of the battery are being studied.

Typically, there is continuous research on a metal-air battery which have a very large theoretical capacity in terms of capacity compared to the current lithium secondary batteries, an all-solid battery with no risk of explosion in terms of safety, a supercapacitor in terms of output, a NaS battery or redox flow battery (RFB) in terms of large size, a thin film battery in terms of miniaturization and the like.

Among them, the all-solid battery refers to a battery in which the liquid electrolyte used in the existing lithium secondary battery is replaced with a solid one, and since it does not use flammable solvents in the battery, ignition or explosion due to the decomposition reaction of the conventional electrolyte solution does not occur at all, safety can be greatly improved. In addition, since Li metal or Li alloy can be used as a material for the negative electrode, there is an advantage that the energy density for the mass and volume of the battery can be dramatically improved.

As such, the all-solid battery has the advantage of improved safety compared to conventional batteries using liquid electrolyte. However, since it is not easy to secure the ion conductivity of the solid electrolyte contained in the all-solid battery, if a commercially available solid electrolyte is used, there is a limit to significantly improving the energy density and lifetime of the all-solid battery.

In particular, in order to be applied as an electrolyte film rather than an electrode of an all-solid battery, the ion conductivity of the solid electrolyte needs to be improved, but in general, there is a problem that the electrical conductivity is increased and the ion conductivity is slightly decreased due to the interfacial resistance of the solid electrolyte.

Accordingly, it is necessary to develop a technology that can improve the ion conductivity by reducing the interfacial resistance of the solid electrolyte.

KR 2019 0086775 A discloses a solid state electrolyte for lithium secondary batteries, comprising a lithium ion-conducting polymer matrix or binder and a lithium ion-conducting inorganic species dispersed in or chemically bonded by the polymer matrix or binder. Further, methods for manufacturing such solid electrolytes and lithium secondary batteries containing the same are disclosed.

Esin Eren ("Li+ doped chitosan-based solid polymer electrolyte with PEDOT:PSS," Beykent Univ. J. Eng. Archit., vol. 5, no. 3, 2018, pp. 1413-1422, DOI: 10.18596/jotcsa.433901) discloses a chitosan-based solid polymer electrolyte with the addition of a polymer mixture composed of poly(3,4-ethylenedioxythiophene) and polystyrene sulfonate (PEDOT:PSS) for use in optoelectronic applications.KR 2020 0122904 A discloses a solid electrolyte membrane in which lithium dendrite growth is suppressed, and an all-solid-state battery comprising the same. The solid electrolyte membrane comprises a solid electrolyte material and metal particles, wherein the metal particles can be alloyed with lithium.

Ju-Myung et al. ("Conducting polymer-skinned electroactive materials of lithium-ion batteries: ready for monocomponent electrodes without additional binders and conductive agents," ACS Appl. Mater. Interfaces, vol. 6, no. 15, 13 August 2014, pp. 12789-12797, DOI: 10.1021/am502736m) disclose a concept of monocomponent electrodes comprising solely electroactive materials that are wrapped with an insignificant amount (less than 0.4 wt %) of conducting polymer (PEDOT:PSS or poly(3,4-ethylenedioxythiophene) doped with poly(styrenesulfonate)). The employed PEDOT_PSS provides an "ultraskinny" surface layer on the electroactive materials and acts as a kind of binder as well as mixed (both electrically and ionically) conductive film.

## Summary

The inventors of one aspect of the present disclosure have conducted research in various ways to solve the above problems, and as a result, have confirmed that by using a mixed conducting polymer having mixed conducting properties including ion conductivity and electrical conductivity, a binder, and a lithium salt and controlling them to an appropriate content range to reduce the interfacial resistance, it is possible to manufacture a solid electrolyte with improved ion conductivity.

Therefore, it is an object of one aspect of the present disclosure to provide a solid electrolyte with improved ion conductivity and a manufacturing method thereof.

It is another object of one aspect of the present disclosure to provide an all-solid battery containing the solid electrolyte.

In order to achieve the above objects, one aspect of the present disclosure provides a solid electrolyte containing a mixed conducting polymer having mixed conducting properties including ion conductivity and electrical conductivity, a binder, and a lithium salt.

The mixed conducting polymer comprises one or more selected from the group consisting of poly(3,4-ethylenedioxythiophene): poly(styrenesulfonate)(PEDOT: PSS), polyacetylene, poly(*para*-phenylene), poly(para-phenylene sulfide), polythiophene, polypyrrole, polyisothianaphtalene, poly(para-phenylene vinylene), polyaniline and poly(3,4-ethylenedioxythiophene).

The binder comprises one or more selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethyl cellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride and poly(vinylidene fluoride)-hexafluoropropene.

The solid electrolyte contains 100 parts by weight of the mixed conducting polymer, and 2 to 30 parts by weight of a binder relative to 100 parts by weight of the mixed conducting polymer, and 5 to 300 parts by weight of a lithium salt relative to 100 parts by weight of the mixed conducting polymer.

The solid electrolyte may contain 100 parts by weight of the mixed conducting polymer, and 2 to 30 parts by weight of a binder relative to 100 parts by weight of the mixed conducting polymer, and 100 to 300 parts by weight of a lithium salt relative to 100 parts by weight of the mixed conducting polymer.

The lithium salt may comprise one or more selected from the group consisting of lithium bis(trifluoromethanesulphonyl)imide (LiTFSI), lithium bis(fluorosulfonyl)imide (LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, $LiC(CF_3SO_2)_3$, $(CF_3SO_2)_2Nli$ and $(FSO_2)_2Nli$.

The solid electrolyte may be in the form of a mixed conducting polymer matrix comprising a mixed conducting polymer and a binder, and a lithium salt comprised in the mixed conducting polymer matrix while being dissociated therein.

The solid electrolyte may be in the form of a solid electrolyte film.

The solid electrolyte may have a thickness of from 10 to 60 $\mu$m.

One aspect of the present disclosure also provides a method for manufacturing said solid electrolyte comprising steps of (S1) coating a mixed solution prepared by adding a mixed conducting polymer, a binder, and a lithium salt to a solvent, on a substrate to form a coating layer; and (S2) drying the coating layer obtained in step (S1).

The coating may be carried out by bar coating, roll coating, spin coating, slit coating, die coating, blade coating, comma coating, slot die coating, lip coating or solution casting.

The drying may be performed at 300 °C or lower.

The substrate may be a stainless steel foil, a polyethylene terephthalate film, a polytetrafluoroethylene film, a polyethylene film, a polypropylene film, polybutene film, a polybutadiene film, a vinyl chloride copolymer film, a polyurethane film, an ethylene-vinyl acetate film, an ethylene-propylene copolymer film, an ethylene-ethyl acrylate copolymer film, an ethylene-methyl acrylate copolymer film or a polyimide film.

The solvent may comprise one or more selected from the group consisting of dimethylsulfoxide (DMSO), isopropyl alcohol, N-methylpyrrolidone (NMP), acetone, xylene, N,N-dimethylformamide (N,N-dimethylmethanamide, DMF), benzene, tetrahydrofuran (THF) and water.

One aspect of the present disclosure also provides an electrode for an all-solid battery, which comprises a coating layer containing the solid electrolyte formed thereon.

The electrode may be a positive electrode or a negative electrode.

One aspect of the present disclosure also provides an all-solid battery comprising the electrode described above.

The solid electrolyte according to one aspect of the present disclosure has an effect of improving adhesive force and adhesive strength due to the binder, and thus reducing interfacial resistance, thereby improving ion conductivity.

In addition, it is possible to control the ion conductivity and the electrical conductivity of the solid electrolyte by controlling the content ratio of the mixed conducting polymer and the lithium salt.

## Description of Drawings

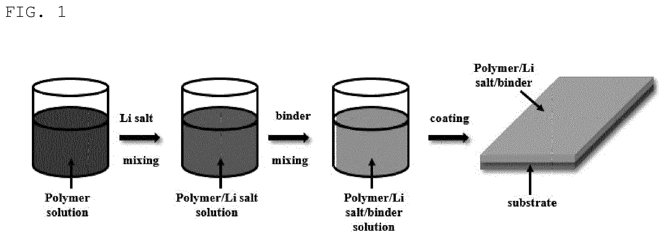

FIG. 1 is a schematic diagram showing a process for preparing a solid electrolyte according to an embodiment of one aspect of the present disclosure.

## Detailed Description

Hereinafter, the present disclosure will be described in more detail to assist understanding of the present disclosure.

The terms and words used in the present specification and claims should not be construed as limited to ordinary or dictionary terms, and should be construed in a sense and concept consistent with the technical idea of the present disclosure, based on the principle that the inventor can properly define the concept of a term to describe his disclosure in the best way possible.

**Solid electrolyte**

One aspect of the present disclosure relates to a solid electrolyte.

The solid electrolyte according to one aspect of the present disclosure comprises a mixed conducting polymer, a binder, and a lithium salt,

wherein the mixed conducting polymer is a polymer having mixed conducting properties including ion conductivity and electrical conductivity,

wherein the mixed conducting polymer comprises one or more selected from the group consisting of poly(3,4-ethylenedioxythiophene):poly(styrenesulfonate) (PEDOT:PSS), polyacetylene, poly(para-phenylene), poly(para-phenylene sulfide), polythiophene, polypyrrole, polyisothianaphtalene, poly(para-phenylene vinylene), polyaniline, and poly(3,4-ethylenedioxythiophene), and

wherein the binder comprises one or more selected from the group consisting of styrene butadiene rubber, acrylated styrene butadiene rubber, acrylonitrile copolymer, acrylonitrile-butadiene rubber, nitrile butadiene rubber, acrylonitrile-styrene butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinyl pyrrolidone, polyvinyl pyridine, polyvinyl alcohol, polyvinyl acetate, polyepichlorohydrin, polyphosphazene, polyacrylonitrile, polystyrene, latex, acrylic resin, phenolic resin, epoxy resin, carboxymethyl cellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene, and

wherein the solid electrolyte comprises 100 parts by weight of a mixed conducting polymer, and 2 to 30 parts by weight of a binder and 5 to 300 parts by weight of a lithium salt relative to 100 parts by weight of the mixed conducting polymer.

The solid electrolyte may be a polymer solid electrolyte.

The solid electrolyte according to one aspect of the present disclosure can improve the ion conductivity as the adhesive force and strength are enhanced by the binder and thus the interfacial resistance is reduced.

The solid electrolyte is in the form of a mixed conducting polymer matrix containing a mixed conducting polymer and a binder, in which a lithium salt is comprised while being dissociated therein, and cations and anions of the lithium salt exist in a dissociated state.

In one aspect of the present disclosure, the mixed conducting polymer is a polymer having mixed conducting properties comprising ion conductivity and electrical conductivity, and thus can simultaneously play a role of a conductive material for moving electrons and an electrolyte for moving lithium ions.

The mixed conducting polymer comprises one or more selected from the group consisting of poly(3,4-ethylenedioxythiophene): poly(styrenesulfonate) (PEDOT: PSS), polyacetylene, poly(para-phenylene), poly(para-phenylene sulfide), polythiophene, polypyrrole, polyisothianaphtalene, poly(para-phenylene vinylene), polyaniline, and poly(3,4-ethylenedioxythiophene).

For example, the mixed conducting polymer may be poly(3,4-ethylenedioxythiophene): poly(styrenesulfonate) (PEDOT: PSS), and the weight ratio of PEDOT and PSS in the PEDOT: PSS may be 1: 1 to 4, 1: 1.5 to 3.5, 1: 2 to 3, or 1: 2.5.

In one aspect of the present disclosure, the binder lowers the crystallinity of the electrically conductive polymer and increases mobility. In addition, the binder can improve the ion conductivity by improving the adhesive force and strength of the solid electrolyte and thus reducing the interfacial resistance.

The binder is a component that assists in bonding of a positive electrode active material and an electrically conductive material, and bonding to a current collector, and the binder comprises one or more selected from the group consisting of styrene butadiene rubber (SBR), acrylated styrene butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinyl pyrrolidone, polyvinyl pyridine, polyvinyl alcohol, polyvinyl acetate, polyepichlorohydrin, polyphosphazene, polyacrylonitrile, polystyrene, latex, acrylic resin, phenolic resin, epoxy resin, carboxymethyl cellulose (CMC), hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise one or more selected from the group consisting of styrene-butadiene rubber, polytetrafluoroethylene, carboxymethyl cellulose, polyacrylic acid, lithium polyacrylate, and polyvinylidene fluoride.

In addition, the binder is contained in an amount of 2 to 30 parts by weight relative to 100 parts by weight of the mixed conducting polymer. Specifically, the content of the binder may be 2 parts by weight or more, 3 parts by weight or more, 5 parts by weight or more, or 10 parts by weight or more, and may be 15 parts by weight or less, 20 parts by weight or less, 25 parts by weight or less, or 30 parts by weight or less. If the content of the binder is less than 2 parts by weight, the degree of improvement in the adhesive force and strength of the solid electrolyte is insignificant, and thus the effect of reducing interfacial resistance may not be good. If the content of the binder exceeds 30 parts by weight, the effect of the binder having low electrical conductivity is increased, and thus rather, the ion conductivity and the electrical conductivity may be greatly reduced.

In one aspect of the present disclosure, the lithium salt can play a role as a lithium source that allows lithium ions to exist by dissociating in the mixed conducting polymer matrix.

The lithium salt may comprise one or more selected from the group consisting of lithium bis(trifluoromethanesulphonyl)imide (LiTFSI), lithium bis(fluorosulfonyl)imide (LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, $LiC(CF_3SO_2)_3$, $(CF_3SO_2)_2nLi$, and $(FSO_2)_2Nli$.

In addition, the lithium salt is contained in an amount of 5 to 300 parts by weight relative to 100 parts by weight of the mixed conducting polymer. Specifically, the content of the lithium salt may be 5 parts by weight or more, 10 parts by weight or more, 20 parts by weight or more, 30 parts by weight or more, 40 parts by weight or more, 50 parts by weight or more, 70 parts by weight or more, or 100 parts by weight or more, and may be 120 parts by weight or less, 130 parts by weight or less, 140 parts by weight or less, 150 parts by weight or less, 200 parts by weight or less, 250 parts by weight or less, or 300 parts by weight or less. If the content of the lithium salt is less than 5 parts by weight, the ion conductivity may be significantly reduced due to the small amount of lithium source. If the content of the lithium salt exceeds 300 parts by weight, since surplus lithium salts that are not dissociated in the mixed conducting polymer are precipitated, the ion conductivity may be reduced.

In one aspect of the present disclosure, the solid electrolyte is in the form of a solid electrolyte film, and may be used as an electrolyte for an all-solid battery or applied to an electrode. IF the solid electrolyte is applied to an electrode, it may be formed on or inside the active material layer of the positive electrode or the negative electrode.

In one aspect of the present disclosure, the solid electrolyte may have a thickness of 10 to 60 $\mu$m. Specifically, the thickness of the solid electrolyte may be 10 $\mu$m or more, 15 $\mu$m or more, or 20 $\mu$m or more, and may be 40 $\mu$m or less, 50 $\mu$m or less or 60 $\mu$m or less. If the thickness of the solid electrolyte is less than 10 $\mu$m, the strength may be weakened. If the thickness exceeds 60 $\mu$m, the energy density may be reduced.

## Manufacturing method of solid electrolyte

Another aspect of the present disclosure also relates to a method for manufacturing said solid electrolyte, and the method for manufacturing the solid electrolyte comprises the steps of (S1) coating a mixed solution prepared by adding a mixed conducting polymer, a binder, and a lithium salt to a solvent, on a substrate to form a coating layer; and (S2) drying the coating layer obtained in step (S1).

Hereinafter, the method for manufacturing a solid electrolyte according to another aspect of the present disclosure will be described in detail for each step.

In another aspect of the present disclosure, in step (S1), a mixed solution obtained by adding a mixed conducting polymer, a binder, and a lithium salt to a solvent may be coated on a substrate. The types and contents of the mixed conducting polymer, the binder, and the lithium salt are as described above.

FIG. 1 is a schematic diagram showing a process of forming a coating layer for manufacturing a solid electrolyte film on a substrate according to an embodiment of another aspect of the present disclosure.

Referring to FIG. 1, a first mixed solution (polymer/Li salt solution) may be obtained by dissolving the mixed conducting polymer in the solvent to prepare a mixed conducting polymer solution, and then mixing the lithium salt (Li salt).

The mixing may be performed until the first mixed solution is uniformly visible to the naked eye. For example, the mixing may be performed for 8 to 16 hours, and specifically, the mixing time may be 8 hours or more, 9 hours or more, or 10 hours or more and may be 14 hours or less, 15 hours or less, or 16 hours or less. If the mixing time is less than 8 hours, the first mixed solution cannot be in a uniform state. If the mixing time exceeds 16 hours, even if the mixing time is increased, there is no significant change in the uniformity of the first mixed solution, and thus the efficiency may be lowered in terms of the processability.

Thereafter, the binder may be mixed with the first mixed solution (polymer/Li salt solution) to obtain a second mixed solution (polymer/Li salt/binder solution) and then, it may be coated on the substrate.

The solvent is not particularly limited as long as it dissolves and/or disperses the mixed conducting polymer, the binder, and the lithium salt to form a solution. For example, the solvent may be one or more selected from the group consisting of dimethylsulfoxide (DMSO), isopropyl alcohol, N-methylpyrrolidone (NMP), acetone, xylene, N,N-dimethylformamide (N,N-dimethylmethanamide, DMF), benzene, tetrahydrofuran (THF), and water. The amount of the solvent used can be adjusted considering the coating thickness of the coating layer, the physical properties of the solid electrolyte to be manufactured and the like.

In addition, the concentration of the first mixed solution and the second mixed solution is not particularly limited as long as the coating process can be performed. For example, the concentration of the first mixed solution and the second mixed solution may be 0.5% to 30%, and specifically, may be 0.5% or more, 1% or more, or 3% or more, and may be 10% or less, 20% or less, or 30% or less. If the concentration of the mixed solution of the first mixed solution and the second mixed solution is less than 0.5%, the coating layer formed is too thin. If the concentration exceeds 30%, it may be difficult to uniformly form a coating layer. The concentrations of the first mixed solution and the second mixed solution may be the same or different.

The coating method may be bar coating, roll coating, spin coating, slit coating, die coating, blade coating, comma coating, slot die coating, lip coating, or solution casting, but is not limited thereto as long as it is a coating method capable of forming a coating layer on the substrate.

In addition, the substrate is not particularly limited as long as it is a substrate that can be used to form the coating layer. For example, the substrate may be a stainless steel foil, a polyethylene terephthalate film, a polytetrafluoroethylene film, a polyethylene film, a polypropylene film, a polybutene film, a polybutadiene film, a vinyl chloride copolymer film, a polyurethane film, an ethylene-vinyl acetate film, an ethylene-propylene copolymer film, an ethylene-ethyl acrylate copolymer film, an ethylene-methyl acrylate copolymer film, or a polyimide film.

In another aspect of the present disclosure, in step (S2), the coating layer obtained in step (S1) may be dried.

The drying is not particularly limited as long as it is a drying method capable of forming a coating layer for forming a solid electrolyte by evaporating the solvent contained in the coating layer. For example, the drying may be performed at 300 °C or lower. Specifically, the drying temperature may be 300 °C or lower, 200 °C or lower, 150 °C or lower, or 100 °C or lower. The drying temperature may vary depending on the type of solvent and drying conditions. For example, if the drying is vacuum drying, the drying may be performed at 100 °C or lower. In addition, if the solvent is acetone or alcohol, it may be performed at 100 °C or lower. If the drying temperature exceeds 300 °C, the solid electrolyte may be thermally decomposed. The lower limit of the drying temperature is not particularly limited, but may be, for example, 60 °C or higher.

In another aspect of the present disclosure, step (S3) may be additionally performed after step (S2). In step (S3), the coating layer after drying in step (S2) may be separated from the substrate to obtain a solid electrolyte.

**Electrode for all-solid battery and all-solid battery comprising same**

The other aspect of the present disclosure also relates to an electrode for an all-solid battery having a coating layer containing the solid electrolyte. The electrode may be a positive electrode or a negative electrode.

In the other aspect of the present disclosure, the positive electrode may include a positive electrode active material layer and a coating layer containing the solid electrolyte formed on one surface of the positive electrode active material layer. The coating layer may be formed by attaching the solid electrolyte prepared by the manufacturing method as described above to the positive electrode active material layer, or may be formed by a coating method commonly used in the art. For example, the coating may be carried out by a spin method, a dipping method, a spray method, a roll coating method, a gravure printing method, a bar coating method, a die coating method, a comma coating method, or a combination thereof. The coating layer containing the solid electrolyte may be in the form of a solid electrolyte film.

In addition, a positive electrode current collector may be additionally formed on the other surface of the positive electrode active material layer. In this case, the positive electrode current collector and the positive electrode active material are not particularly limited as long as they are commonly used in all-solid batteries.

The positive electrode active material layer comprises a positive electrode active material, a binder, and an electrically conductive material.

In addition, the positive electrode active material is not particularly limited as long as it is a material capable of reversibly intercalating and de-intercalating lithium ions, and for example, may be, but is not limited to, layered compounds or compounds substituted with one or more transition metals, such as lithium cobalt oxide ($LiCoO_2$), lithium nickel oxide ($LiNiO_2$), $Li[Ni_xCo_yMn_zM_v]O_2$ (wherein, M is any one or two or more elements selected from the group consisting of Al, Ga and In; $0.3{\leq}x<1.0$, $0{\leq}y$, $z{\leq}0.5$, $0{\leq}v{\leq}0.1$, $x+y+z+v=1$), $Li(Li_aM_{b-a-b'}M'_{b'})O_{2-c}A_c$ (wherein, $0{\leq}a{\leq}0.2$, $0.6{\leq}b{\leq}1$, $0{\leq}b'{\leq}0.2$, $0{\leq}c{\leq}0.2$; M comprises Mn and one or more selected from the group consisting of Ni, Co, Fe, Cr, V, Cu, Zn and Ti; M' is one or more selected from the group consisting of Al, Mg and B, and A is one or more selected from the group consisting of P, F, S and N); lithium manganese oxide such as Formula $Li_{1+y}Mn_{2-y}O_4$ (wherein, y is 0 to 0.33), $LiMnO_3$, $LiMn_2O_3$, $LiMnO_2$; lithium copper oxide ($Li_2CuO_2$); vanadium oxide such as $LiV_3O_8$, $LiFe_3O_4$, $V_2O_5$, $Cu_2V_2O_7$; Ni site type lithium nickel oxide represented by Formula $LiNi_{1-y}MyO_2$ (wherein, M is Co, Mn, Al, Cu, Fe, Mg, B or Ga, y is 0.01 to 0.3); lithium manganese composite oxide represented by Formula $LiMn_{2-y}M_yO_2$ (wherein, M is Co, Ni, Fe, Cr, Zn or Ta, y is 0.01 to 0.1),

or $Li_2Mn_3MO_8$ (wherein, M is Fe, Co, Ni, Cu or Zn); $LiMn_2O_4$ in which part of Li in the Formula is substituted with alkaline earth metal ions; disulfide compounds, and $Fe_2(MoO_4)_3$.

In addition, the positive electrode active material may be contained in an amount of 40 to 80% by weight based on the total weight of the positive electrode active material layer. Specifically, the content of the positive electrode active material may be 40% by weight or more or 50% by weight or more, and may be 70% by weight or less or 80% by weight or less. If the content of the positive electrode active material is less than 40% by weight, the connectivity between the wet positive electrode active material layer and the dry positive electrode active material layer may be insufficient. If the content of the positive electrode active material exceeds 80 % by weight, mass transfer resistance may be increased.

In addition, the binder is a component that assists in bonding between the positive electrode active material and the electrically conductive material, and assists in bonding to the current collector. The binder may comprise one or more selected from the group consisting of styrene butadiene rubber, acrylated styrene butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinyl pyrrolidone, polyvinyl pyridine, polyvinyl alcohol, polyvinyl acetate, polyepichlorohydrin, polyphosphazene, polyacrylonitrile, polystyrene, latex, acrylic resin, phenolic resin, epoxy resin, carboxymethyl cellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise one or more selected from the group consisting of styrene-butadiene rubber, polytetrafluoroethylene, carboxymethyl cellulose, polyacrylic acid, lithium polyacrylate, and polyvinylidene fluoride.

In addition, the binder may be contained in an amount of 1% by weight to 30% by weight based on the total weight of the positive electrode active material layer, and, specifically, the content of the binder may be 1% by weight or more or 3% by weight or more, and may be 15% by weight or less or 30% by weight or less. If the content of the binder is less than 1% by weight, the adhesive force between the positive electrode active material and the positive electrode current collector may be lowered. If the content of the binder exceeds 30% by weight, the adhesive force is improved, but the content of the positive electrode active material is reduced by that amount, and thus the capacity of the battery may be lowered.

In addition, the electrically conductive material is not particularly limited as long as it has excellent electrical conductivity without causing side reactions in the internal environment of the all-solid battery and without causing chemical changes in the battery. The electrically conductive material may be typically graphite or conductive carbon, and for example, as the electrically conductive material, graphite such as natural graphite, artificial graphite; carbon black such as carbon black, acetylene black, Ketjen black, Denka black, thermal black, channel black, furnace black, lamp black, thermal black; carbon-based materials whose crystal structure is graphene or graphite; electrically conductive fibers such as carbon fibers and metal fibers; carbon fluoride; metal powders such as aluminum powder and nickel powder; electrically conductive whiskers such as zinc oxide and potassium titanate; electrically conductive oxides such as titanium oxide; and electrically conductive polymers such as polyphenylene derivatives may be used alone or in combination of two or more thereof, but is not necessarily limited thereto.

The electrically conductive material may be generally contained in an amount of 0.5% by weight to 30% by weight based on the total weight of the positive electrode active material layer, and specifically, the content of the electrically conductive material may be 0.5% by weight or more or 1% by weight or more, and may be 20% by weight or less or 30% by weight or less. If the content of the electrically conductive material is too small, i.e., less than 0.5 % by weight, it is difficult to expect an effect of improving electrical conductivity or the electrochemical properties of the battery may be deteriorated. If the content of the electrically conductive material exceeds 30% by weight and thus is too large, the amount of the positive electrode active material may be relatively small, so that the capacity and energy density may be lowered. A method for incorporating the electrically conductive material to the positive electrode is not particularly limited, and a conventional method known in the art, such as coating on the positive electrode active material, may be used.

In addition, the positive electrode current collector supports the positive electrode active material layer, and serves to transfer electrons between the external conductive wire and the positive electrode active material layer.

The positive electrode current collector is not particularly limited as long as it has high electrical conductivity without causing chemical changes in the all-solid battery. For example, as the positive electrode current collector, copper, stainless steel, aluminum, nickel, titanium, palladium, sintered carbon; a copper or stainless steel surface-treated with carbon, nickel, silver, **etc.;** an aluminum-cadmium alloy, etc. may be used.

The positive electrode current collector may have a fine irregularity structure on the surface of the positive electrode current collector or have a three-dimensional porous structure, in order to strengthen the bonding force with the positive electrode active material layer. Accordingly, the positive electrode current collector may comprise various forms such as a film, a sheet, a foil, a mesh, a net, a porous body, a foam, and a non-woven fabric.

The positive electrode as described above may be prepared by the conventional method, and specifically, the positive electrode may be prepared by coating and drying a composition for forming the positive electrode active material layer prepared by mixing the positive electrode active material, the electrically conductive material and the binder in an organic solvent, onto the positive electrode current collector, and optionally compression-molding it onto the positive electrode current collector to improve the density of the electrode. At this time, as the organic solvent, it is preferable to use one that can uniformly disperse the positive electrode active material, the binder, and the electrically conductive material and that evaporates easily. Specifically, acetonitrile, methanol, ethanol, tetrahydrofuran, water, isopropyl alcohol and the like may be exemplified.

In the other aspect of the present disclosure, the negative electrode may comprise a negative electrode active material layer and a coating layer containing the solid electrolyte formed on one surface of the negative electrode active material layer. The method of forming the coating layer may be the same as a method of forming the coating layer at the positive electrode.

In addition, a negative electrode current collector may be additionally formed on the other surface of the negative electrode active material layer. In this case, the negative electrode current collector and the negative electrode active material are not particularly limited as long as they are commonly used in all-solid batteries.

The negative electrode active material layer comprises a negative electrode active material, a binder, and an electrically conductive material.

The negative electrode active material may be a material capable of reversibly intercalating or de-intercalating lithium ion ($Li^+$), a material capable of reacting with lithium ion to reversibly form a lithium-containing compound, Li-metal, or a lithium alloy.

The material capable of reversibly intercalating or de-intercalating lithium ion ($Li^+$) may be, for example, crystalline carbon, amorphous carbon or mixtures thereof. The material capable of reacting with lithium ion ($Li^+$) to reversibly form a lithium-containing compound may be, for example, tin oxide, titanium nitrate, or silicon. The lithium alloy may be, for example, an alloy of lithium (Li) and the metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be Li-metal, and specifically, may be in the form of a Li-metal thin film or Li-metal powder.

The negative electrode active material may be contained in an amount of 40 to 80% by weight based on the total weight of the negative electrode active material layer. Specifically, the content of the negative electrode active material may be 40 % by weight or more or 50 % by weight or more, and may be 70 % by weight or less or 80 % by weight or less. If the content of the negative electrode active material is less than 40% by weight, the connectivity between the wet negative electrode active material layer and the dry negative electrode active material layer may be insufficient. If the content of the negative electrode active material exceeds 80 % by weight, mass transfer resistance may be increased.

In addition, the binder is the same as described above for the positive electrode active material layer.

In addition, the electrically conductive material is the same as described above for the positive electrode active material layer.

In addition, the negative electrode current collector is not particularly limited as long as it has electrical conductivity without causing chemical change in the battery, and for example, the negative electrode current collector may be copper, stainless steel, aluminum, nickel, titanium, sintered carbon; copper or stainless steel surface-treated with carbon, nickel, titanium, silver, etc.; or aluminum-cadmium alloy. In addition, the negative electrode current collector may be used in various forms, such as a film having a fine irregularity structure on its surface, a sheet, a foil, a net, a porous body, a foam, and a non-woven fabric, as in the positive electrode current collector.

The manufacturing method of the negative electrode is not particularly limited, and may be manufactured by forming a negative electrode active material layer on a negative electrode current collector using a layer or film formation method commonly used in the art. For example, a method such as pressing, coating, or vapor deposition may be used. Also, a case where a thin film of a metal lithium is formed on a metal plate by initial charging after assembling the battery without a lithium thin film on the negative electrode current collector is also comprised in the negative electrode of the other aspect of the present disclosure.

The other aspect of the present disclosure also relates to an all-solid battery comprising the electrode for the all-solid battery.

One or more of the positive electrode and the negative electrode comprised in the all-solid battery may have a coating layer containing the solid electrolyte as described above.

Since the solid electrolyte exhibits excellent properties in both ion conductivity and electrical conductivity, it can be applied to an all-solid battery in the form of a coating layer formed on the positive electrode and/or the negative electrode, thereby improving the performance and lifetime characteristics of the all-solid battery.

Hereinafter, preferred examples of the present disclosure will be described in order to help the understanding of the present disclosure. It will be apparent to those skilled in the art, however, that the following examples are only illustrative of the present disclosure and that various changes and modifications can be made within the scope and technical spirit of the present disclosure, and also it is natural that such variations and modifications are within the scope of the appended claims.

In the following Examples and Comparative Examples, a solid electrolyte was prepared according to the weight ratio of the mixed conducting polymer, the binder, and the lithium salt as shown in Table 1 below.

[Table 1]

| | Solid electrolyte | | | |
|---|---|---|---|---|
| | Mixed conducting polymer | Binder | Lithium salt | Weight ratio (mixed conducting polymer: lithium salt: binder) |
| Example 1 | PEDOT: PSS | SBR | LiTFSI | 27.5: 55: 1 |
| Example 2 | PEDOT: PSS | SBR | LiTFSI | 11: 22: 1 |
| Example 3 | PEDOT: PSS | CMC | LiTFSI | 11: 22: 1 |
| Comparative Example 1 | PEO | - | LiTFSI | 10: 1 |
| Comparative Example 2 | PEDOT: PSS | - | - | - |
| Comparative Example 3 | - | SBR | - | - |
| Comparative Example 4 | PEDOT: PSS | SBR | - | 11: 1 |
| Comparative Example 5 | - | SBR | LiTFSI | 22 : 1 |

**Example 1**

5 g of a PEDOT: PSS solution (Sigma-Aldrich, 1.1 wt.%), which is a mixed conducting polymer, and 0.11 g of LiTFSI, which is a lithium salt, were sufficiently stirred for 12 hours to obtain a first mixed solution, and then 2 mg of SBR, which is a binder, was added to obtain a second mixed solution. The second mixed solution was coated on a stainless steel foil with a doctor blade to form a coating layer. The weight ratio ((PEDOT: PSS): LiTFSI: SBR) of the mixed conducting polymer, the lithium salt, and the binder is 27.5: 55: 1. The weight ratio of PEDOT and PSS is 1: 2.5.

Thereafter, the solid electrolyte film was prepared by vacuum drying at 100 °C for one day to remove the solvent in the second mixed solution.

**Example 2**

A solid electrolyte film was prepared in the same manner as in Example 1, except that the weight ratio of the mixed conducting polymer, the lithium salt, and the binder is set to 11: 22: 1.

**Example 3**

A solid electrolyte film was prepared in the same manner as in Example 2, except that CMC is used instead of SBR as a binder.

**Comparative Example 1**

A solid electrolyte film was prepared in the same manner as in Example 1, except that PEO is used instead of the mixed conducting polymer, the binder is not used, and the weight ratio between PEO and LiTFSI, which is a lithium salt, is set to 10: 1.

**Comparative Example 2**

A solid electrolyte film was prepared in the same manner as in Example 1, except that only PEDOT: PSS, which is a mixed conducting polymer, is used.

**Comparative Example 3**

A solid electrolyte film was prepared in the same manner as in Example 1, except that only SBR, which is a binder, is used.

**Comparative Example 4**

A solid electrolyte film was prepared in the same manner as in Example 1, except that the lithium salt is not used, and the weight ratio of the mixed conducting polymer and the binder is 11: 1.

**Comparative Example 5**

An electrolyte film was prepared in the same manner as in Example 1, except that the mixed conducting polymer is not used, and the weight ratio of the lithium salt and the binder is 22:1.

**Experimental Example 1: Evaluation of solid electrolyte**

For the solid electrolytes prepared in Examples and Comparative Examples, tests for ion conductivity and electrical conductivity were conducted as follows, and the results are shown in Table 2 below.

Ion conductivity

The solid electrolyte film was brought into contact with a stainless steel plate to form a coin cell, and then, an AC voltage was applied at room temperature. In this case, the measurement frequency as an applied condition was set to an amplitude range of 500 KHz to 20 MHz, and impedance was measured using BioLogic company's VMP3. Using Equation 1 below, the resistance of the solid electrolyte film was obtained from the intersection point ($R_b$) where the semicircle or straight line of the measured impedance trajectory meets the real number axis, and the ion conductivity ($\sigma$) of the solid electrolyte film was calculated from the area and thickness of the sample.

$$[\text{Equation } 1]$$

$$\sigma(S \cdot cm^{-1}) = \frac{1}{R_b} \frac{t}{A}$$

$\sigma$: Ion conductivity
$R_b$: Intersection point of the impedance trajectory with the real number axis
A: Area of sample
t: Thickness of sample

Electrical conductivity (S)

Cyclic voltammetry measurement (-0.1V to 0.1V) was performed on the coin cell manufactured in the same structure as the coin cell manufactured when measuring the electrical conductivity, and the electrical conductivity was calculated using Equation 2 below.

$$[\text{Equation } 2]$$
$$S = A/V * \text{Film thickness/film dimension}$$

A: Current
V: Voltage
Film thickness: Thickness of sample
Film dimension: Area of sample

[Table 2]

| | Measured temperature (°C) | Thickness (μm) | Ion conductivity (S/cm) | Electrical conductivity (S/cm) |
|---|---|---|---|---|
| Example 1 | 25 | 26 | $3.86 \times 10^{-5}$ | $3.122 \times 10^{-6}$ |
| Example 2 | 25 | 29 | $4.22 \times 10^{-5}$ | $8.117 \times 10^{-7}$ |

(continued)

|  | Measured temperature (°C) | Thickness (μm) | Ion conductivity (S/cm) | Electrical conductivity (S/cm) |
|---|---|---|---|---|
| Example 3 | 25 | 25 | $3.93 \times 10^{-5}$ | $7.894 \times 10^{-7}$ |
| Comparative Example 1 | 25 | 43 | $9.26 \times 10^{-8}$ | $8.778 \times 10^{-11}$ |
| Comparative Example 2 | 25 | 11 | - | $2.716 \times 10^{-6}$ |
| Comparative Example 3 | 25 | 26 | - | - |
| Comparative Example 4 | 25 | 32 | - | - |
| Comparative Example 5 | 25 | 19 | $5.36 \times 10^{-9}$ | - |

As shown in Table 2, it was found that the ion conductivity of the mixed conducting polymers of Examples 1 to 3 is excellent as compared to the PEO solid electrolyte film of Comparative Example 1, which is a general solid electrolyte film.

In the above, although the present disclosure has been described by way of limited embodiments and drawings, the present disclosure is not limited thereto, and it is apparent to those skilled in the art that various modifications and variations can be made within the scope of the claims to be described below.

**Claims**

1. A solid electrolyte comprising:

   a mixed conducting polymer;
   a binder; and
   a lithium salt,
   wherein the mixed conducting polymer is a polymer having mixed conducting properties including ion conductivity and electrical conductivity,
   wherein the mixed conducting polymer comprises one or more selected from the group consisting of poly(3,4-ethylenedioxythiophene):poly(styrenesulfonate) (PEDOT:PSS), polyacetylene, poly(para-phenylene), poly(para-phenylene sulfide), polythiophene, polypyrrole, polyisothianaphtalene, poly(para-phenylene vinylene), polyaniline, and poly(3,4-ethylenedioxythiophene), and
   wherein the binder comprises one or more selected from the group consisting of styrene butadiene rubber, acrylated styrene butadiene rubber, acrylonitrile copolymer, acrylonitrile-butadiene rubber, nitrile butadiene rubber, acrylonitrile-styrene butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinyl pyrrolidone, polyvinyl pyridine, polyvinyl alcohol, polyvinyl acetate, polyepichlorohydrin, polyphosphazene, polyacrylonitrile, polystyrene, latex, acrylic resin, phenolic resin, epoxy resin, carboxymethyl cellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene, and
   wherein the solid electrolyte comprises 100 parts by weight of a mixed conducting polymer, and 2 to 30 parts by weight of a binder and 5 to 300 parts by weight of a lithium salt relative to 100 parts by weight of the mixed conducting polymer.

2. The solid electrolyte according to claim 1, wherein
   the lithium salt comprises one or more selected from the group consisting of lithium bis(trifluoromethanesulphonyl) imide (LiTFSI), lithium bis(fluorosulfonyl)imide (LiFSI) , $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiASF_6$, $LiSbF_6$, $LiAlCl_4$, $CH_3SO_3Li$, $CF_3SO_3Li$, LiSCN, $LiC(CF_3SO_2)_3$, $(CF_3SO_2)_2Nli$, and $(FSO_2)_2Nli$.

3. The solid electrolyte according to claim 1, wherein
   the solid electrolyte comprises 100 parts by weight of a mixed conducting polymer, and 2 to 30 parts by weight of a binder relative to 100 parts by weight of the mixed conducting polymer, and 100 to 300 parts by weight of a lithium salt relative to 100 parts by weight of the mixed conducting polymer.

4. The solid electrolyte according to claim 1, wherein

the solid electrolyte is in the form of a mixed conducting polymer matrix comprising a mixed conducting polymer and a binder, and
a lithium salt comprised in the mixed conducting polymer matrix while being dissociated therein.

5. The solid electrolyte according to claim 1, wherein

the solid electrolyte is in the form of a solid electrolyte film, and
wherein the thickness of the solid electrolyte is from 10 to 60 $\mu$m.

6. A method for manufacturing a solid electrolyte according to any one of the preceding claims, comprising:

(S1) coating a mixed solution prepared by adding

a mixed conducting polymer,
a binder,
and a lithium salt

to a solvent, on a substrate to form a coating layer; and
(S2) drying the coating layer obtained in step (S1).

7. The method according to claim 6, wherein
the coating is carried out by bar coating, roll coating, spin coating, slit coating, die coating, blade coating, comma coating, slot die coating, lip coating, or solution casting.

8. The method according to claim 6,
wherein the drying is carried out at 300 °C or lower.

9. The method according to claim 6, wherein
the substrate is a stainless-steel foil, a polyethylene terephthalate film, a polytetrafluoroethylene film, a polyethylene film, a polypropylene film, a polybutene film, a polybutadiene film, a vinyl chloride copolymer film, a polyurethane film, an ethylene-vinyl acetate film, an ethylene-propylene copolymer film, an ethylene-ethyl acrylate copolymer film, an ethylene-methyl acrylate copolymer film, or a polyimide film.

10. The method according to claim 6,
wherein the solvent is one or more selected from the group consisting of dimethylsulfoxide (DMSO), isopropyl alcohol, N-methylpyrrolidone (NMP), acetone, xylene, N,N-dimethylformamide (N,N-dimethylmethanamide, DMF), benzene, tetrahydrofuran (THF), and water.

11. An electrode for an all-solid battery, wherein
the electrode comprises a coating layer containing the solid electrolyte of claim 1 formed thereon.

12. The electrode according to claim 11, wherein
the electrode is a positive electrode or a negative electrode.

13. An all-solid battery comprising the electrode of claim 11.

**Patentansprüche**

1. Festelektrolyt, umfassend:

ein gemischtes leitfähiges Polymer;
ein Bindemittel; und
ein Lithiumsalz,

wobei das gemischte leitfähige Polymer ein Polymer mit gemischten leitfähigen Eigenschaften einschließlich Ionenleitfähigkeit und elektrischer Leitfähigkeit ist,

wobei das gemischte leitfähige Polymer eines oder mehrere ausgewählt aus der Gruppe bestehend aus Poly(3,4-ethylendioxythiophen):Poly(styrolsulfonat) (PEDOT:PSS), Polyacetylen, Poly(para-phenylen), Poly(para-phenylensulfid), Polythiophen, Polypyrrol, Polyisothianaphtalen, Poly(para-phenylenvinylen), Polyanilin und Poly(3,4-ethylendioxythiophen) umfasst, und

wobei das Bindemittel eines oder mehrere ausgewählt aus der Gruppe bestehend aus Styrol-Butadien-Kautschuk, acryliertem Styrol-Butadien-Kautschuk, Acrylnitril-Copolymer, Acrylnitril-Butadien-Kautschuk, Nitril-Butadien-Kautschuk, Acrylnitril-Styrol-Butadien-Copolymer, Acrylkautschuk, Butylkautschuk, Fluorkautschuk, Polytetrafluorethylen, Polyethylen, Polypropylen, Ethylen/Propylen-Copolymer, Polybutadien, Polyethylenoxid, chlorsulfoniertem Polyethylen, Polyvinylpyrrolidon, Polyvinylpyridin, Polyvinylalkohol, Polyvinylacetat, Polyepichlorhydrin, Polyphosphazen, Polyacrylnitril, Polystyrol, Latex, Acrylharz, Phenolharz, Epoxidharz, Carboxymethylcellulose, Hydroxypropylcellulose, Celluloseacetat, Celluloseacetatbutyrat, Celluloseacetatpropionat, Cyanoethylcellulose, Cyanoethylsaccharose, Polyester, Polyamid, Polyether, Polyimid, Polycarboxylat, Polycarbonsäure, Polyacrylsäure, Polyacrylat, Lithiumpolyacrylat, Polymethacrylsäure, Polymethacrylat, Polyacrylamid, Polyurethan, Polyvinylidenfluorid und Poly(vinylidenfluorid)hexafluorpropen umfasst, und

wobei der Festelektrolyt 100 Gewichtsteile eines gemischten leitfähigen Polymers und 2 bis 30 Gewichtsteile eines Bindemittels und 5 bis 300 Gewichtsteile eines Lithiumsalzes bezogen auf 100 Gewichtsteile des gemischten leitfähigen Polymers umfasst.

2. Festelektrolyt nach Anspruch 1, wobei
das Lithiumsalz eines oder mehrere ausgewählt aus der Gruppe bestehend aus Lithiumbis(trifluormethansulfonyl)imid (LiTFSI), Lithiumbis(fluorsulfonyl)imid (LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiASF_6$, $LiSbF_6$, $LiAlCl_4$, $CH_3SO_3Li$, $CF_3SO_3Li$, LiSCN, $LiC(CF_3SO_2)_3$, $(CF_3SO_2)_2NLi$ und $(FSO_2)_2NLi$ umfasst.

3. Festelektrolyt nach Anspruch 1, wobei
der Festelektrolyt 100 Gewichtsteile eines gemischten leitfähigen Polymers und 2 bis 30 Gewichtsteile eines Bindemittels bezogen auf 100 Gewichtsteile des gemischten leitfähigen Polymers und 100 bis 300 Gewichtsteile eines Lithiumsalzes bezogen auf 100 Gewichtsteile des gemischten leitfähigen Polymers umfasst.

4. Festelektrolyt nach Anspruch 1, wobei

der Festelektrolyt in Form einer gemischten leitfähigen Polymermatrix vorliegt, die ein gemischtes leitfähiges Polymer und ein Bindemittel umfasst, und
ein Lithiumsalz, das in der gemischten leitfähigen Polymermatrix enthalten ist, während es darin dissoziiert ist.

5. Festelektrolyt nach Anspruch 1, wobei

der Festelektrolyt in Form eines Festelektrolytfilms vorliegt, und
wobei die Dicke des Festelektrolyten 10 bis 60 μm beträgt.

6. Verfahren zur Herstellung eines Festelektrolyten nach einem der vorhergehenden Ansprüche, umfassend:

(S1) Beschichten einer gemischten Lösung, hergestellt durch Zugeben

eines gemischten leitfähigen Polymers,
eines Bindemittels,
und eines Lithiumsalzes

zu einem Lösungsmittel, auf ein Substrat, um eine Beschichtungsschicht zu bilden; und
(S2) Trocknen der in Schritt (S1) erhaltenen Beschichtungsschicht.

7. Verfahren nach Anspruch 6, wobei
das Beschichten durch Stabbeschichten, Walzenbeschichten, Rotationsbeschichten, Schlitzbeschichten, Düsenbeschichten, Rakelbeschichten, Kommabeschichten, Schlitzdüsenbeschichten, Lippenbeschichten oder Lösungsgießen durchgeführt wird.

**8.** Verfahren nach Anspruch 6,
wobei das Trocknen bei 300 °C oder weniger durchgeführt wird.

**9.** Verfahren nach Anspruch 6, wobei
das Substrat eine Edelstahlfolie, ein Polyethylenterephthalatfilm, ein Polytetrafluorethylenfilm, ein Polyethylenfilm, ein Polypropylenfilm, ein Polybutenfilm, ein Polybutadienfilm, ein Vinylchloridcopolymerfilm, ein Polyurethanfilm, ein Ethylenvinylacetatfilm, ein Ethylenpropylencopolymerfilm, ein Ethylenethylacrylatcopolymerfilm, ein Ethylenmethylacrylatcopolymerfilm oder ein Polyimidfilm ist.

**10.** Verfahren nach Anspruch 6,
wobei das Lösungsmittel eines oder mehrere ausgewählt aus der Gruppe bestehend aus Dimethylsulfoxid (DMSO), Isopropylalkohol, N-Methylpyrrolidon (NMP), Aceton, Xylol, N,N-Dimethylformamid (*N,N*-Dimethylmethanamid, DMF), Benzol, Tetrahydrofuran (THF) und Wasser ist.

**11.** Elektrode für eine Festkörperbatterie, wobei
die Elektrode eine Beschichtungsschicht umfasst, die den darauf gebildeten Festelektrolyten nach Anspruch 1 enthält.

**12.** Elektrode nach Anspruch 11, wobei
die Elektrode eine positive Elektrode oder eine negative Elektrode ist.

**13.** Festkörperbatterie, umfassend die Elektrode nach Anspruch 11.

**Revendications**

**1.** Électrolyte solide comprenant :

un polymère conducteur mixte ;
un liant ; et
un sel de lithium,
dans lequel le polymère conducteur mixte est un polymère ayant des propriétés conductrices mixtes incluant une conductivité ionique et une conductivité électrique,
dans lequel le polymère conducteur mixte comprend un ou plusieurs éléments sélectionnés dans le groupe constitué de poly(3,4-éthylènedioxythiophène):poly(styrènesulfonate) (PEDOT:PSS), polyacétylène, poly(para-phénylène), poly(para-phénylène sulfure), polythiophène, polypyrrole, polyisothianaphtalène, poly(para-phénylène vinylène), polyaniline et poly(3,4-éthylènedioxythiophène), et
dans lequel le liant comprend un ou plusieurs éléments sélectionnés dans le groupe constitué de caoutchouc de styrène butadiène, caoutchouc de styrène butadiène acrylé, copolymère d'acrylonitrile, caoutchouc d'acrylonitrile-butadiène, caoutchouc de nitrile butadiène, copolymère d'acrylonitrile-styrène butadiène, caoutchouc d'acrylique, caoutchouc de butyle, caoutchouc fluoré, polytétrafluoroéthylène, polyéthylène, polypropylène, copolymère d'éthylène/propylène, polybutadiène, oxyde de polyéthylène, polyéthylène chlorosulfoné, pyrrolidone de polyvinyle, pyridine de polyvinyle, alcool de polyvinyle, acétate de polyvinyle, polyépichlorohydrine, polyphosphazène, polyacrylonitrile, polystyrène, latex, résine acrylique, résine phénolique, résine époxy, cellulose de carboxyméthyle, cellulose d'hydroxypropyle, acétate de cellulose, butyrate d'acétate de cellulose, propionate d'acétate de cellulose, cyanoéthyle de cellulose, sucrose de cyanoéthyle, polyester, polyamide, polyéther, polyimide, polycarboxylate, acide polycarboxylique, acide polyacrylique, polyacrylate, polyacrylate de lithium, acide polyméthacrylique, polyméthacrylate, polyacrylamide, polyuréthane, fluorure de polyvinylidène et poly(fluorure de vinylidène)-hexafluoropropène, et
dans lequel l'électrolyte solide comprend 100 parties en poids d'un polymère conducteur mixte et 2 à 30 parties en poids d'un liant et 5 à 300 parties en poids d'un sel de lithium pour 100 parties en poids du polymère conducteur mixte.

**2.** Électrolyte solide selon la revendication 1, dans lequel
le sel de lithium comprend un ou plusieurs éléments sélectionnés dans le groupe constitué de lithium bis(trifluorométhanesulfonyl)imide (LiTFSI), lithium bis(fluorosulfonyl)imide (LiFSI) , $LiNO_3$, $LiOH$, $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiASF_6$, $LiSbF_6$, $LiAlCl_4$, $CH_3SO_3Li$, $CF_3SO_3Li$, $LiSCN$, $LiC(CF_3SO_2)_3$,

$(CF_3SO_2)_2Nli$ et $(FSO_2)_2Nli$.

**3.** Électrolyte solide selon la revendication 1, dans lequel
l'électrolyte solide comprend 100 parties en poids d'un polymère conducteur mixte et 2 à 30 parties en poids d'un liant pour 100 parties en poids du polymère conducteur mixte et 100 à 300 parties en poids d'un sel de lithium pour 100 parties en poids du polymère conducteur mixte.

**4.** Électrolyte solide selon la revendication 1, dans lequel

l'électrolyte solide est sous la forme d'une matrice de polymère conducteur mixte comprenant un polymère conducteur mixte et un liant, et
un sel de lithium compris dans la matrice de polymère conducteur mixte tout en y étant dissocié.

**5.** Électrolyte solide selon la revendication 1, dans lequel

l'électrolyte solide est sous la forme d'un film d'électrolyte solide, et
dans lequel l'épaisseur de l'électrolyte solide est de 10 à 60 $\mu$m.

**6.** Procédé de fabrication d'un électrolyte solide selon l'une quelconque des revendications précédentes, consistant à :

(S1) revêtir une solution mixte préparée en ajoutant

un polymère conducteur mixte,
un liant, et
un sel de lithium

à un solvant, sur un substrat pour former une couche de revêtement ; et
(S2) sécher la couche de revêtement obtenue à l'étape (S1).

**7.** Procédé selon la revendication 6, dans lequel
le revêtement est effectué par revêtement à la barre, revêtement au rouleau, revêtement par centrifugation, revêtement à fente, revêtement à filière, revêtement à la lame, revêtement comma, revêtement par filière à fente, revêtement par effleurement ou coulage de solution.

**8.** Procédé selon la revendication 6,
dans lequel le séchage est effectué à 300°C ou moins.

**9.** Procédé selon la revendication 6, dans lequel
le substrat est une feuille d'acier inoxydable, un film de téréphtalate de polyéthylène, un film de polytétrafluoroéthylène, un film de polyéthylène, un film de polypropylène, un film de polybutène, un film de polybutadiène, un film de copolymère de chlorure de vinyle, un film de polyuréthane, un film d'acétate de éthylène-vinyle, un film de copolymère d'éthylène-propylène, un film de copolymère d'acrylate d'éthylène-éthyle, un film de copolymère d'acrylate d'éthylène-méthyle ou un film de polyimide.

**10.** Procédé selon la revendication 6,
dans lequel le solvant est un ou plusieurs éléments sélectionnés dans le groupe constitué de diméthylsulfoxyde (DMSO), alcool isopropylique, N-méthylpyrrolidone (NMP), acétone, xylène, N,N-diméthylformamide (N,N-diméthylméthanamide, DMF), benzène, tétrahydrofurane (THF) et eau.

**11.** Électrode pour une batterie tout-solide, dans laquelle
l'électrode comprend une couche de revêtement contenant l'électrolyte solide selon la revendication 1, laquelle y est formée.

**12.** Électrode selon la revendication 11, dans lequel
l'électrode est une électrode positive ou une électrode négative.

**13.** Batterie tout-solide comprenant l'électrode selon la revendication 11.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20190086775 A

- KR 20200122904 A

**Non-patent literature cited in the description**

- **ESIN EREN**. Li+ doped chitosan-based solid polymer electrolyte with PEDOT:PSS. *Beykent Univ. J. Eng. Archit.*, 2018, vol. 5 (3), 1413-1422

- **JU-MYUNG et al.** Conducting polymer-skinned electroactive materials of lithium-ion batteries: ready for monocomponent electrodes without additional binders and conductive agents. *ACS Appl. Mater. Interfaces*, 13 August 2014, vol. 6 (15), 12789-12797